# EUROPEAN PATENT APPLICATION

(11) **EP 4 775 949 A1**
(43) Date of publication of application: **15.07.2026**
(21) Application number: 25227792.6
(22) Date of filing: 30.12.2025
(51) Int. Cl.: G01N 3/32

(54) **MULTIPLE SPECIMEN HIGH CYCLE FATIGUE TEST RIG WITH INDIVIDUAL LOAD CAPABILITY**

(30) Priority: 10.01.2025 US 202519016264
(71) Applicant: RTX Corporation, Farmington, CT 06032 (US)
(72) Inventor: Mackey, Brandon Thomas, Manchester, CT 06040 (US); Lomenzo, Richard A, Jr., Enfield, CT 06082 (US)
(74) Representative: Schmitt-Nilson Schraud Waibel Wohlfrom Patentanwälte Partnerschaft mbB

(57) **Abstract**

A test rig with a multi-specimen fixture system including an actuator including a central shaft; a moving component in operative communication with the central shaft; a stationary component located proximate the moving component arrayed around the central shaft; a first connector coupled to the stationary component, the first connector configured to secure a test specimen; a second connector coupled to the moving component, the second connector configured to secure the test specimen; a load cell in operative communication with at least one of the first connector or the second connector; and at least one compliant element in operative communication with the moving component, wherein the at least one compliant element is configured to produce an independent load to the test specimen.

## Description

The present disclosure is directed to the improved multiple specimen high cycle fatigue test rig with individual load capability.

High Cycle Fatigue (HCF) testing of material specimens can be time consuming do to the limits of test cycle times and cycle lives at stress ranges of interest. Additionally, variability in material properties requires multiple specimens to be tested at the same stress level to characterize the inherent material scatter. To address this, commercially available test rigs are available to test up to 16 specimens simultaneously to reduce overall test time. The test specimens may be held in a multi-specimen fixture. Typically, the fixture has a radially symmetric configuration. The radially symmetric configuration has uniform deformation at each specimen site under application of a load.

These test rigs can include the capability to monitor loads on each specimen. However, one limitation of these test rigs is that it is typically not necessary to have as many as 16 specimens tested at the same stress level. Instead, it may be desirable to test 4 specimens, each at four different stress levels. In the current configuration, the commercially available test rigs are not configured to test multiple specimens at different stress levels.

In accordance with the present disclosure, there is provided a test rig with a multi-specimen fixture system comprising an actuator including a central shaft; a moving component in operative communication with the central shaft; a stationary component located proximate the moving component arrayed around the central shaft; a first connector coupled to the stationary component, the first connector configured to secure a test specimen; a second connector coupled to the moving component, the second connector configured to secure the test specimen; a load cell in operative communication with at least one of the first connector or the second connector; and at least one compliant element in operative communication with the moving component, wherein the at least one compliant element is configured to produce an independent load to the test specimen.

Particular embodiments further may include at least one, or a plurality of, the following optional features, alone or in combination with each other:

A further embodiment of any of the foregoing embodiments may additionally and/or alternatively include the moving portion includes one of a central portion and multiple arms extending radially from the central portion or a disk extending radially from the central portion.

A further embodiment of any of the foregoing embodiments may additionally and/or alternatively include the at least one compliant element comprises a feature formed in the moving component.

A further embodiment of any of the foregoing embodiments may additionally and/or alternatively includethe moving component comprises multiple specimen zones attached to the moving component, wherein each of the multiple specimen zones are configured to attach with the test specimen; wherein the at least one compliant element being in operative communication with at least one of the specimen zones; wherein the test rig is configured with different compliances installed in series with any number of test specimens to adjust the load in each specimen.

A further embodiment of any of the foregoing embodiments may additionally and/or alternatively include the at least one compliant element comprises a reduced thickness in a cross section of the moving component configured to adjust the load applied to the test specimen.

A further embodiment of any of the foregoing embodiments may additionally and/or alternatively include the test rig further comprising at least one vertical preload adjustment of at least one test specimen to ensure a predetermined preload for selected test specimens.

A further embodiment of any of the foregoing embodiments may additionally and/or alternatively include the at least one compliant element is positioned in series with the test specimen resulting in a reduction of an applied force to the test specimen.

In accordance with the present disclosure, there is provided a multiple specimen high cycle fatigue test rig with individual load capability comprising a multi-specimen fixture system comprising an actuator including a central shaft; a moving component in operative communication with the central shaft; a stationary component located proximate the moving component arrayed around the central shaft; a first connector coupled to the stationary component, the first connector configured to secure a test specimen; a second connector coupled to the moving component, the second connector configured to secure the test specimen; a load cell in operative communication with the first connector; and at least one compliant element in operative communication with the moving component, wherein the at least one compliant element is configured to produce an independent load to the test specimen.

Particular embodiments further may include at least one, or a plurality of, the following optional features, alone or in combination with each other:

A further embodiment of any of the foregoing embodiments may additionally and/or alternatively include the at least one compliant element comprises a feature formed in the moving component.

A further embodiment of any of the foregoing embodiments may additionally and/or alternatively include the moving component comprises multiple specimen zones attached to the moving component, wherein each of the multiple specimen zones are configured to attach with the test specimen; wherein the at least one compliant element being in operative communication with at least one of the specimen zones; wherein the test rig is configured with different compliances installed in series with any number of test specimens to adjust the load in each specimen.

A further embodiment of any of the foregoing embodiments may additionally and/or alternatively include the at least one compliant element comprises a reduced thickness in a cross section of the moving component configured to adjust the load applied to the test specimen.

A further embodiment of any of the foregoing embodiments may additionally and/or alternatively include the at least one compliant element is positioned in series with the test specimen resulting in a reduction of an applied force to the test specimen.

A further embodiment of any of the foregoing embodiments may additionally and/or alternatively includethe moving portion includes one of a central portion and multiple arms extending radially from the central portion with a reduced thickness in a cross section of the arm or a disk extending radially from the central portion and a reduced thickness in a cross section of the disk.

In accordance with the present disclosure, there is provided a process of forming a multiple specimen high cycle fatigue test rig with individual load capability comprising forming a multi-specimen fixture system comprising forming an actuator including a central shaft; coupling a moving component in operative communication with the central shaft; locating a stationary component proximate the moving component arrayed around the central shaft; coupling a first connector to the stationary component, configuring the first connector to secure a test specimen coupling a second connector to the moving component, configuring the second connector to secure the test specimen; coupling a load cell in operative communication with at least one of the first connector or the second connector; and forming at least one compliant element in operative communication with the moving component, configuring the at least one compliant element to produce an independent load to the test specimen.

Particular embodiments further may include at least one, or a plurality of, the following optional features, alone or in combination with each other:

A further embodiment of any of the foregoing embodiments may additionally and/or alternatively include the process further comprising attaching multiple specimen zones to the moving component; configuring each of the multiple specimen zones to attach with an individual test specimen; coupling the at least one compliant element in operative communication at least one of the specimen zones; configuring the test rig with different compliances installed in series with any number of test specimens to adjust the load in each individual test specimen.

A further embodiment of any of the foregoing embodiments may additionally and/or alternatively include the process further comprising forming the at least one compliant element comprising a reduced thickness in a cross section of the moving component; configuring the at least one compliant element to adjust the load applied to the test specimen.

A further embodiment of any of the foregoing embodiments may additionally and/or alternatively include the process further comprising positioning the at least one compliant element in series with the test specimen; and reducing an applied force to the test specimen.

A further embodiment of any of the foregoing embodiments may additionally and/or alternatively include.

A further embodiment of any of the foregoing embodiments may additionally and/or alternatively include the process further comprising forming the moving portion comprising a central portion and multiple arms extending radially from the central portion with a reduced thickness in a cross section of the arm.

A further embodiment of any of the foregoing embodiments may additionally and/or alternatively include the process further comprising forming the moving portion comprising a disk extending radially from a central portion and a reduced thickness in a cross section of the disk.

Other details of the multiple specimen high cycle fatigue test rig with individual load capability are set forth in the following detailed description and the accompanying drawings wherein like reference numerals depict like elements.

The above and further advantages of this disclosure may be better understood by referring to the following description in conjunction with the accompanying drawings, in which like reference numerals indicate like elements and features in the various figures. Letters may be appended to reference numbers to distinguish from reference numbers for similar features and to indicate a correspondence to other features in the drawings. For clarity, not every element may be labeled in every figure. The drawings are not necessarily to scale, emphasis instead being placed upon illustrating the principles of the disclosure.
Fig. 1 is a schematic representation of a simplified block diagram depicting a cross-section of an exemplary dynamic mechanical test instrument.
Fig. 2 is a plan view schematic representation of the specimen zones for the moving component of FIG. 1.
Fig. 3 is a schematic representation of an exemplary moving component configured as a disk.
Fig. 4 is a schematic representation of an exemplary free body diagram.

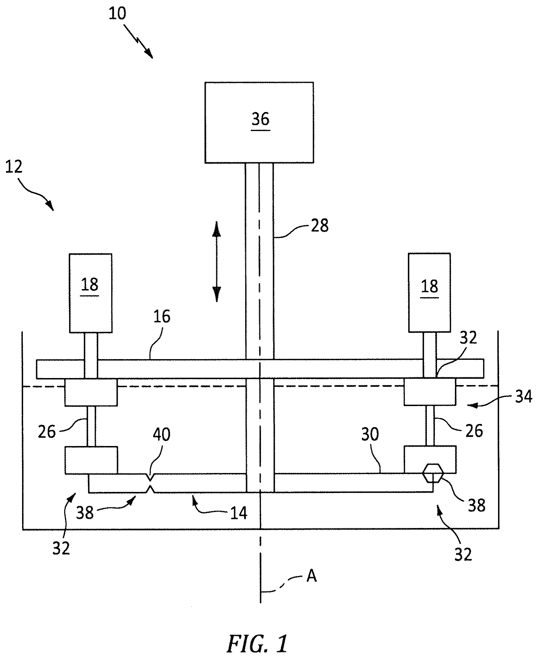

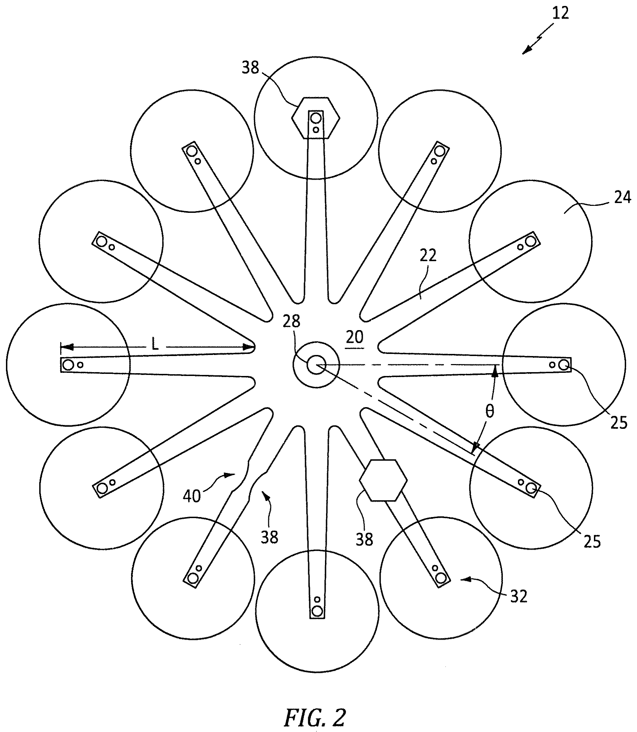

Referring now to Fig. 1 and Fig. 2, showing an exemplary dynamic mechanical test instrument or simply test rig 10. The test rig 10 can perform multi-specimen fatigue testing. The test rig 10 can be used for conducting tension-tension, compression-compression or tension-compression tests to derive fatigue life curves and failure criteria for various specimens. For example, the test rig 10 may provide tension or compression displacements of tens of millimeters and may cycle at rates up to a few hundred cycles per second.

The test rig 10 can include a multi-specimen fixture system 12. The multi-specimen fixture system 12 can include a moving component 14. The moving component 14 can move vertically along an axis A. The multi-specimen fixture system 12 can include a stationary component 16. The multi-specimen fixture system 12 can include a load cell 18. The load cell 18 can be located proximate the stationary component 16 and configured to indicate a load during testing.

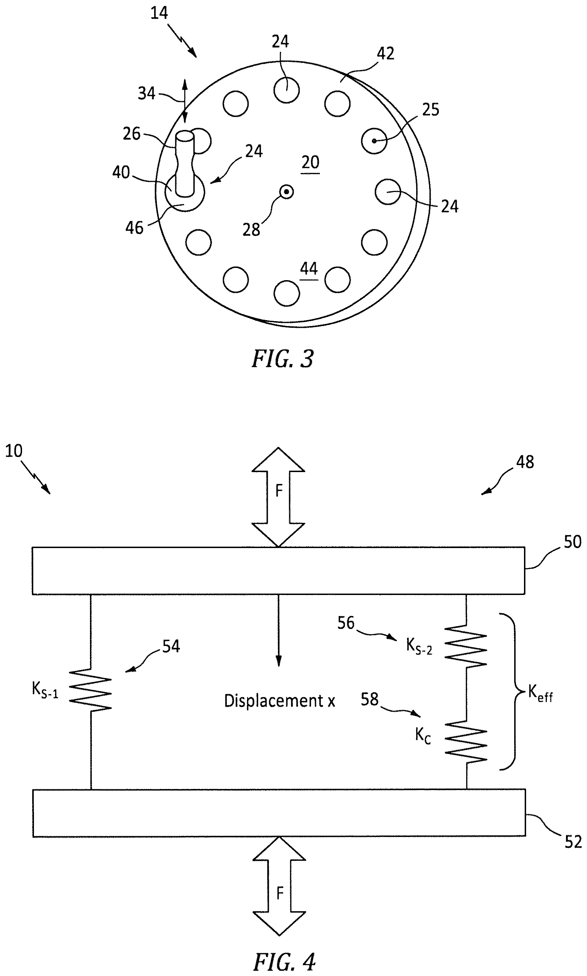

The moving component 14 of the system 12 can be configured with a central portion 20 and multiple arms 22 extending radially from the central portion 20, shown in Fig. 2. In another exemplary embodiment, the moving component 14 can be configured as a disk 42 extending radially from the central portion 20, shown in Fig. 3. The moving component 14 can include multiple specimen zones 24, as shown in the plan view of Fig. 2 and Fig. 3, where a specimen zone 24 is defined as the space occupied by a specimen 26 attached to the moving component 14.

Generally, a specimen attachment location 25 on the moving component 14 can be centered in the depicted specimen zone 24 shown in Fig. 2 and Fig. 3. Each specimen zone 24 can be at the same radial distance from a central shaft 28 as the other specimen zones 24. The zones 24 can be equally distributed in angle θ with respect to the central shaft 28.

One end of each specimen 26 is secured at a top side 30 of the moving component 14 near a distal end 32 of the arm 22. The specimen 26 can be secured at an opposite end and coupled to the load cell 18 adjacent to the stationary component 16 above the distal end of the arm 22 where an independent preload adjustment can be made to each specimen 26.

Connectors 32 used to secure the ends of the specimens 26 can be configured according to the specimens being tested and can include clamps, grips, vices and the like. Vertical preload adjustments may be made for some or all the specimens 26 to ensure a predetermined preload 34 for selected specimens 26 prior to initiating a test. Each load cell 18 can be independently aligned for specimen position.

The moving component 14 can be formed near or at one end of the shaft 28 such that both parts together are a unitary structure. Alternatively, the moving component 14 can be secured to the shaft 28 by a locking collar and/or a clamping device (not shown). The shaft 28 can be coupled to an actuator 36, such as a linear motor, which moves the moving component 14 vertically to achieve the compression or tension displacements for each specimen 26. Each load cell 18 monitors the force applied at each specimen 26 and can identify the occurrence of a specimen failure.

During testing, the upper attachment point for each specimen 28 remains stationary while a cyclic vertical motion is imparted to the moving component 14. The cyclic frequency can be maintained constant throughout the duration of the test or may be adjusted or otherwise programmed to change in a predetermined way throughout the test period. Similarly, the displacement amplitude can be adjusted or controlled either manually or in a programmed manner. Signals generated by the load cells 18 are typically monitored so that the load at each specimen 28 can be determined over time.

A compliant element 38 can be in operative communication with the moving component 14. The compliant element 38 can be configured to adjust the load applied to the specimen 26. The compliant element 38 can be positioned in series with the test specimen 26, resulting in a reduction of the applied force to the specimen 26. The compliant element 38 can be a feature formed in the moving component 14. The compliant element 38 can be formed or attached along a length L of the arm 22. The location of the compliant element 38 can be varied along the length L of the arm 22. It is contemplated that selective locations along selective arms 22 can include a compliant element 38. The configuration of the compliant element 38 allows for variation of the load 34 applied to a particular specimen 26 or a subset of specimens 26. The compliant element 38 is configured to adjust the load 34, for example reduce the applied force for any particular specimen 26. By reducing the applied force to a specimen 26, the testing can incorporate a variety of accumulated cycles simultaneously at different stress levels. The test rig 10 can operate with different compliances installed in series with any number of test specimens 26 to adjust the load in each specimen 26.

In an exemplary embodiment, the compliant element 38 can be a reduced thickness 40 in a cross section of an arm 22. The reduced thickness 40 can create an area of compliance in the arm 22 resulting in application of a load 34 that is different from another arm 22 without the reduced thickness 40.

Referring also to Fig. 3, in an exemplary embodiment, the moving component 14 can be configured as a disk or plate 42. The disk 42 can be configured to support a variety of test specimens 26. The specimens 26 can be in operative communication with and arrayed along a surface 44 of the disk 42. The moving component 14 can include a compliant element 38 proximate the test specimen 26. The compliant element 38 can be configured as a reduced thickness 40 in the disk 42 as seen in Fig. 3. In an exemplary embodiment, the compliant element 38 can be formed as a groove or trench 46 proximate the specimen zoned 24. The groove 46 can provide a similar load response to the reduced thickness 40.

Referring also to Fig. 4, a spring system 48 is shown to demonstrate the effects of the compliant element 38. The spring system 48 represents the capacity of the test rig 10 to include a variety of loads 34 simultaneously. The spring system 48 depicts a first beam 50 opposite a second beam 52. Load forces F are applied to each beam 50, 52. The first spring 54 and second spring 56 represent the stiffness of the test specimens and are denoted K_{S-1} and K_{S-2} respectively. The second spring 56 is coupled in series with a third spring (K_{C}) 58, which is representative of a compliant element. The addition of the third spring 58, K_{C}, in series with 56, K_{S-1}, results in a K_{eff} that is lower than K_{S-1}. Therefore, the load experienced on the specimen 56 is lower than the force in 54. The third spring 58 represents the compliant element 38 being introduced into the test rig 10.

A technical advantage of the disclosed multiple specimen high cycle fatigue test rig with individual load capability includes allowance for a range of varying loads to be applied to a multitude of specimens.

Another technical advantage of the disclosed multiple specimen high cycle fatigue test rig with individual load capability includes reducing overall test time for generating fully characterized HCF stress to cycle failure plots, as different stress levels are imposed on a multitude of specimens simultaneously.

Another technical advantage of the disclosed multiple specimen high cycle fatigue test rig with individual load capability includes incorporating a compliant element in the design of the rig.

Another technical advantage of the disclosed multiple specimen high cycle fatigue test rig with individual load capability includes incorporating a compliant element in the design of the specimen.

Another technical advantage of the disclosed multiple specimen high cycle fatigue test rig with individual load capability includes incorporating a compliant element in the design as an individual element introduced in the load path of the test specimen.

There has been provided a multiple specimen high cycle fatigue test rig with individual load capability. While the multiple specimen high cycle fatigue test rig with individual load capability has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A test rig with a multi-specimen fixture system comprising:
an actuator including a central shaft;
a moving component in operative communication with the central shaft;
a stationary component located proximate the moving component arrayed around the central shaft;
a first connector coupled to the stationary component, the first connector configured to secure a test specimen;
a second connector coupled to the moving component, the second connector configured to secure the test specimen;
a load cell in operative communication with at least one of the first connector or the second connector; and
at least one compliant element in operative
communication with the moving component, wherein the at least one compliant element is configured to produce an independent load to the test specimen.

2. The test rig according to claim 1, wherein the moving portion includes one of a central portion and multiple arms extending radially from the central portion or a disk extending radially from the central portion.

3. The test rig according to claim 1 or 2, wherein the at least one compliant element comprises a feature formed in the moving component.

4. The test rig according to any of claims 1 to 3, wherein the moving component comprises multiple specimen zones attached to the moving component, wherein each of the multiple specimen zones are configured to attach with the test specimen;
wherein the at least one compliant element being in operative communication with at least one of the specimen zones;
wherein the test rig is configured with different compliances installed in series with any number of test specimens to adjust the load in each specimen.

5. The test rig according to any of claims 1 to 4, wherein the at least one compliant element comprises a reduced thickness in a cross section of the moving component configured to adjust the load applied to the test specimen.

6. The test rig according to any of claims 1 to 5, further comprising:
at least one vertical preload adjustment of at least one test specimen to ensure a predetermined preload for selected test specimens.

7. The test rig according to any of claims 1 to 6, wherein the at least one compliant element is positioned in series with the test specimen resulting in a reduction of an applied force to the test specimen.

8. A process of forming a multiple specimen high cycle fatigue test rig with individual load capability comprising:
forming a multi-specimen fixture system comprising:
forming an actuator including a central shaft;
coupling a moving component in operative communication with the central shaft;
locating a stationary component proximate the
moving component arrayed around the central shaft;
coupling a first connector to the stationary
component, configuring the first connector to secure a test specimen;
coupling a second connector to the moving component, configuring the second connector to secure the test specimen;
coupling a load cell in operative communication with at least one of the first connector or the second connector; and
forming at least one compliant element in operative communication with the moving component, configuring the at least one compliant element to produce an independent load to the test specimen.

9. The process according to claim 8, further comprising:
forming the at least one compliant element as a feature formed in the moving component.

10. The process according to claim 8 or 9, further comprising:
attaching multiple specimen zones to the moving component;
configuring each of the multiple specimen zones to
attach with an individual test specimen;
coupling the at least one compliant element in
operative communication at least one of the specimen zones;
configuring the test rig with different compliances
installed in series with any number of test specimens to adjust the load in each individual test specimen.

11. The process according to any of claims 8 to 10, further comprising:
forming the at least one compliant element comprising a reduced thickness in a cross section of the moving component;
configuring the at least one compliant element to adjust the load applied to the test specimen.

12. The process according to any of claims 8 to 11, further comprising:
positioning the at least one compliant element in series with the test specimen; and
reducing an applied force to the test specimen.

13. The process according to any of claims 8 to 12, further comprising:
forming the moving portion comprising a central portion and multiple arms extending radially from the central portion with a reduced thickness in a cross section of the arm.

14. The process according to claim 13, further comprising:
forming the moving portion comprising a disk extending radially from a central portion and a reduced thickness in a cross section of the disk.
